# EUROPEAN PATENT SPECIFICATION

(11) **EP 2 623 734 B1**
(45) Date of publication and mention of the grant of the patent: **25.03.2015**
(21) Application number: 13152939.8
(22) Date of filing: 28.01.2013
(51) Int. Cl.: F01K 17/06, F01K 23/10

(54) **Steam injection assembly for a combined cycle system**
Dampfeinspritzanordnung für ein Kombikraftwerk
Ensemble d'injection de vapeur pour système à cycle combiné

(30) Priority: 03.02.2012 US 201213365580
(43) Date of publication of application: 07.08.2013
(73) Proprietor: General Electric Company, Schenectady, New York 12345 (US)
(72) Inventor: Zhang, Jianmin, Greenville, SC 29615 (US); Kim, Kihyung, Atlanta, GA 30339 (US); Kippel, Bradly Aaron, Greenville, SC 29615 (US); Zhang, Hua, Greenville, SC 29615 (US)
(74) Representative: Cleary, Fidelma

(56) References cited:
- EP-A1- 0 676 532
- EP-A2- 0 959 235
- WO-A1-01/88342
- WO-A1-99/45321
- DE-A1- 19 900 026
- GB-A- 2 436 128
- US-B1- 6 523 346

## Description

### BACKGROUND OF THE INVENTION

The subject matter disclosed herein relates to combined cycle systems, and more particularly to steam generation and injection into such a system.

As gas turbine systems take on more base-load power generation, a higher fluctuation of electricity load demand is expected and, as a result, more gas turbine power plants are forced to run at part load conditions during off-peak hours. The problems associated with the part load operation are that increased gas turbine turndown ratios typically result in higher NOx emission, as well as turbine fuel efficiency deteriorating as the load is reduced. EP-0959235-A discloses a prior-art gas turbine system.

### BRIEF DESCRIPTION OF THE INVENTION

According to one aspect of the invention, a steam injection assembly for a combined cycle system includes a heat recovery system having at least one superheater configured to generate a steam supply. Also included is a gas turbine system having an inlet and a compressor, wherein the inlet receives an air supply and the steam supply for combined injection into the compressor.

According to another aspect of the invention, a steam injection assembly for a combined cycle system includes a gas turbine system having a compressor, a combustor, and a turbine. Also included is a heat recovery system configured to receive and process heat exhaust from the gas turbine system. Further included is at least one superheater disposed within the heat recovery system and configured to generate a steam supply. Yet further included is at least one valve operably connected to the at least one superheater for controlling the flow rate and the temperature of the steam supply. Also included is an inlet disposed proximate the compressor and configured to receive an air supply and the steam supply for injection to the compressor.

According to yet another aspect of the invention, a steam injection assembly for a combined cycle system includes a gas turbine system having a compressor, a combustor and a turbine. Also included is a heat recovery system configured to produce steam and distribute a steam supply out of the heat recovery system. Further included is an inlet assembly disposed proximate the compressor, wherein the inlet assembly receives and mixes an air supply and the steam supply prior to injection into the compressor.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 is a schematic view of a combined cycle system having a turbine system and a heat recovery system;
FIG. 2 is a schematic view of the heat recovery system;
FIG. 3 is a front perspective view of an inlet nozzle for the turbine system; and
FIG. 4 is a rear perspective view of the inlet nozzle for the turbine system.

The detailed description explains embodiments of the invention, together with advantages and features, by way of example with reference to the drawings.

### DETAILED DESCRIPTION OF THE INVENTION

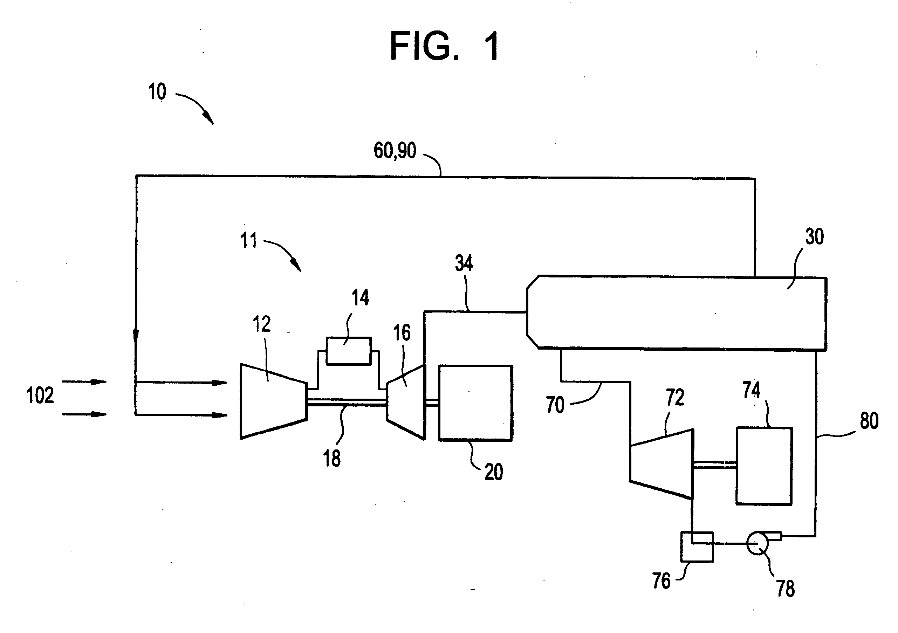

Referring to FIG. 1, a combined cycle system 10 is schematically illustrated. The combined cycle system includes a gas turbine system generally represented as 11. The gas turbine system 11 includes a compressor 12 for compressing air and a combustor assembly 14 capable of receiving fuel. The fuel and compressed air are ignited to form a high temperature, high pressure combustion product or air stream that is used to drive a turbine 16. The turbine 16 includes a plurality of rotating assemblies or stages (not illustrated) that are operationally connected to the compressor 12 through a compressor/turbine shaft 18 (sometimes referred to as a rotor).

In operation, air flows into the compressor 12 and is compressed into a high pressure gas. The high pressure gas is supplied to the combustor assembly 14 and mixed with fuel, for example process gas and/or synthetic gas (syngas). The fuel/air or combustible mixture ignite to form a high pressure, high temperature combustion gas stream of approximately 538 degrees Celsius (°C) to 1593°C (1000 degrees Fahrenheit (°F) to 2900°F). Alternatively, the combustor assembly 14 can combust fuels that include, but are not limited to, natural gas and/or fuel oil. In any event, the combustor assembly 14 channels the combustion gas stream to the turbine 16 which converts thermal energy to mechanical, rotational energy which is capable of driving a power source, such as a generator 20.

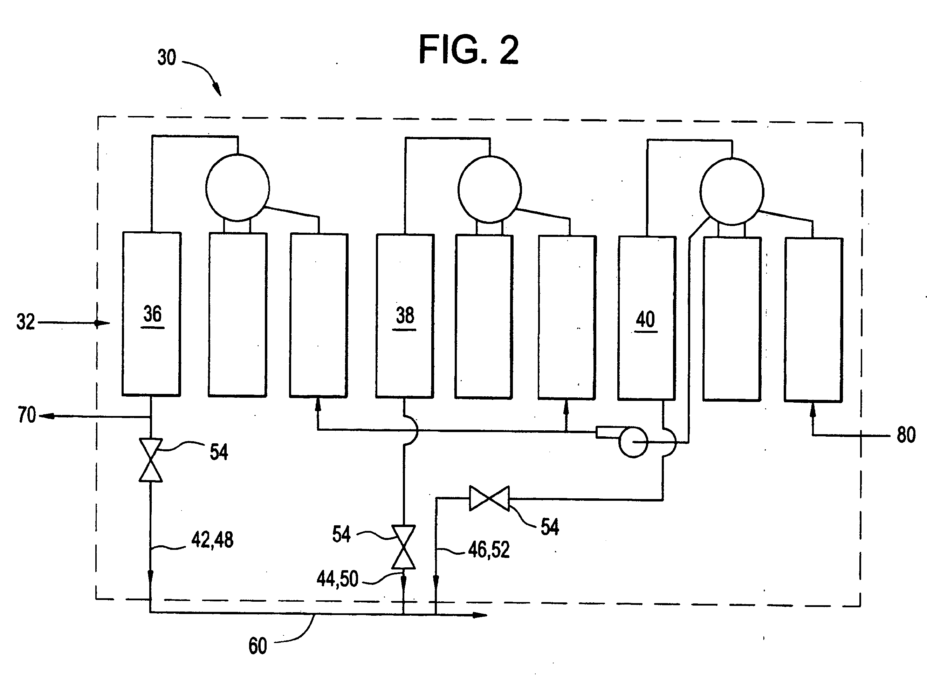

Referring now to FIG. 2, the combined cycle system 10 also comprises a heat recovery system 30 that is capable of receiving a heat exhaust 32 through a heat exhaust line 34 from the turbine 16. The heat recovery system 30 includes at least one, but typically a plurality of, pressure superheaters 36, 38 and 40. In the illustrated embodiment, the heat recovery system 30 includes a first, or high pressure (HP), superheater 36, a second, or intermediate pressure (IP), superheater 38, and a third, or low pressure (LP), superheater 40. Each of the superheaters 36, 38 and 40 are configured to receive a portion of the heat exhaust 32 and produce a first steam 42 at a first pressure, a second steam 44 at a second pressure, and a third steam 46 at a third pressure, respectively. Each pressure superheater 36, 38 and 40 is transferred through a first steam line 48, a second steam line 50 and a third steam line 52, respectively, and each of the first steam line 48, second steam line 50 and third steam line 52 includes a valve 54. Each valve 54 may be adjusted to control properties of the first steam 42, second steam 44 and third steam 46, with such properties including, but not being limited to, flow rate and temperature.

Although the heat recovery system 30 has been described as an assembly having a plurality of superheaters, it is to be appreciated that the generation of heat, and hence steam, may be derived from an alternative heat recovery system 30, such as an auxiliary boiler or process steam source.

A steam supply 60 exits the heat recovery system 30 and is comprised of one or more of the first steam 42, second steam 44 and third steam 46. As described above, each steam 42, 44 and 46 are of distinct pressures, and in one illustrative arrangement, the first steam 42 has a relatively high pressure, with respect to the second steam 44 and the third steam 46, while the second steam 44 has an intermediate pressure, specifically having a pressure less than the first steam 42, but greater than the third steam 46, which is of a relatively low pressure. The steam supply 60 may selectively be comprised of only one of the steams 42, 44 or 46, or alternatively, may be selectively comprised of any combination of the steams 42, 44 or 46. While the steams and their relative pressures have been described and illustrated in a particular order, it is to be appreciated that the actual number of superheaters and steams may be modified, as well as their relative pressures to one another.

Referring again to FIG. 1, in addition to providing the steam supply 60, the heat recovery system 30 is capable of distributing a steam source 70 to a steam turbine 72 which is operably connected to an auxiliary generator 74. The steam turbine 72 drives the auxiliary generator 74 and also expels a steam vapor into a condenser 76, where the steam vapor is condensed into, at least partially, water. The water is them pumped by a feed water pump 78 back to the heat recovery system 30 along a water line 80 (FIG. 2), which is then introduced to at least one of the pressure superheaters 36, 38 or 40 to facilitate production of the steam supply 60.

The steam supply 60 is then routed through a steam supply line 90, which terminates at one end proximate an inlet assembly 100 of the gas turbine system 11. The inlet assembly 100 is configured to receive an air supply 102 that is at an ambient condition having a temperature lower relative to that of the steam supply 60. The steam supply 60 mixes with the air supply 102 in the inlet assembly 100 in preparation for injection to the gas turbine system 11, and more specifically the compressor 12.

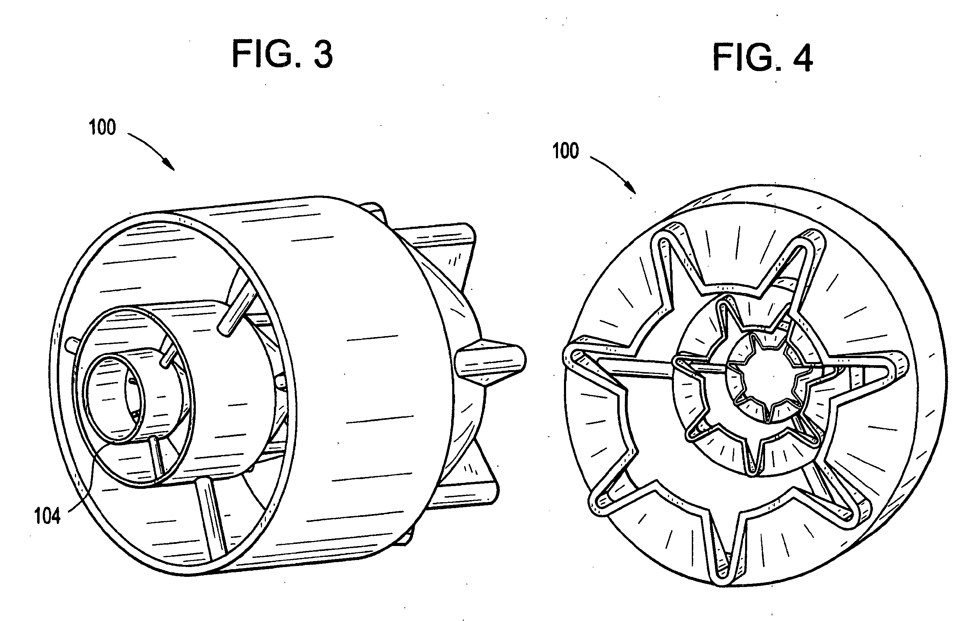

Referring to FIGS. 3 and 4, the inlet assembly 100 includes an injector manifold (not shown for simplicity) for directly injecting the steam supply 60 into the inlet assembly 100, where mixing with the air supply 102 occurs. To facilitate mixing of the steam supply 60 and the air supply 102, the inlet assembly 100 includes at least one acoustic nozzle 104 to cause effective mixing of the air supply 102 and the steam supply 60. The acoustic nozzle 104 induces the air supply 102 into the inlet assembly 100 to mix and reduce the exit velocity of the steam supply 60. Therefore, the at least one acoustic nozzle 104 provides the benefit of reducing the noise associated with the injection process. However, other type of acoustic nozzles may be employed for acoustic control.

Advantageously, the combined cycle system 10 mixes the steam supply 60 with the air supply 102 prior to injection into the gas turbine system 11, resulting in an increased temperature and humidity of the air supply 102 entering the gas turbine system 11, and specifically the compressor 12. Such mixing may occur upstream of the compressor 12, or in close proximity thereto. The heat energy addition to the air supply 102 allows the compressor 12 to run at part load conditions with higher volumetric flow rates that it would be at ambient conditions, which leads to higher fuel efficiency. Additionally, added moisture content in the air supply 102 assists in NOx reduction. The NOx reduction at the part load range also may assist to reduce the demand on a Selective Catalytic Reactor (SCR) or potential removal of the SCR, based on application requirements.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A steam injection assembly for a combined cycle system (10) comprising:
a heat recovery system (30) having at least one superheater (36,38,40) configured to generate a steam supply (60); and
a gas turbine system (11) having an inlet (100) and a compressor (12), **characterized in that** the inlet (100) receives an air supply (102) and the steam supply (60) for combined injection into the compressor (12).

2. The steam injection assembly of claim 1, wherein the heat recovery system (30) includes a plurality of superheaters (36,38,40).

3. The steam injection assembly of claim 2, wherein each of the plurality of superheaters (36,38,40) produce a steam at distinct pressures.

4. The steam injection assembly of any of claims 1 to 3, wherein the heat recovery system (30) includes a first superheater (36) for producing a first steam (42) at a first pressure, a second superheater (38) for producing a second steam (44) at a second pressure, and a third superheater (40) for producing a third steam (46) at a third pressure.

5. The steam injection assembly of claim 4, wherein the second pressure is less than the first pressure and the third pressure is less than the second pressure.

6. The steam injection assembly of claim 5, wherein the steam supply (60) comprises at least one of the first steam (42), the second steam (44) and the third steam (46).

7. The steam injection assembly of claim 6, wherein the steam supply (60) comprises the second steam (44) and the third steam (46).

8. The steam injection assembly of any preceding claim, wherein the inlet (100) includes a filter housing, wherein the inlet (100) receives and mixes the air supply (102) and the steam supply (60) prior to injection into the compressor (12).

9. The steam injection assembly of claim 8, wherein the steam supply (60) has a steam temperature and the air supply (102) has an air temperature, wherein the steam temperature is greater than the air temperature.

10. The steam injection assembly of any preceding claim, further comprising:
a steam turbine (72) that receives steam from the heat recovery system (30) and expels a steam vapor;
a condenser (76) for condensing the vapor to water; and
a water pump (78) configured to receive the water from the condenser (76) and pump the water to the heat recovery system (32).

11. The steam injection assembly of any preceding claim, wherein the gas turbine system (11) includes a combustor (14), and a turbine (16); and wherein
the heat recovery system (30) is configured to receive and process heat exhaust from the gas turbine system (11); and further comprising
at least one valve (54) operably connected to the at least one superheater (36,38,42) for controlling a flow rate and a temperature of the steam supply (60).

12. The steam injection assembly of any preceding claim, wherein heat recovery system (32) comprises at least one of a boiler and a process steam source (70).

## Patentansprüche

1. Dampfinjektionsbaugruppe für ein Kombi-Kreislauf-System (10), umfassend:
ein Wärmerückgewinnungssystem (30), das mindestens einen Überhitzer (36, 38, 40) besitzt, der konfiguriert ist, um eine Dampfversorgung (60) zu erzeugen; und
ein Gasturbinensystem (11), das einen Eintritt (100) und einen Verdichter (12) besitzt, **gekennzeichnet dadurch**, dass der Eintritt (100) eine Luftversorgung (102) und die Dampfversorgung (60) für eine Kombiinjektion in den Verdichter (12) aufnimmt.

2. Dampfinjektionsbaugruppe gemäß Anspruch 1, wobei das Wärmerückgewinnungssystem (30) eine Vielzahl von Überhitzern (36, 38, 40) einschließt.

3. Dampfinjektionsbaugruppe gemäß Anspruch 2, wobei jeder der Vielzahl von Überhitzern (36, 38, 40) einen Dampf mit unterschiedlichen Drücken produziert.

4. Dampfinjektionsbaugruppe gemäß einem der Ansprüche 1 bis 3, wobei das Wärmerückgewinnungssystem (30) einen ersten Überhitzer (36) zum Produzieren eines ersten Dampfs (42) mit einem ersten Druck, einen zweiten Überhitzer (38) zum Produzieren eines zweiten Dampfs (44) mit einem zweiten Druck und einen dritten Überhitzer (40) zum Produzieren eines dritten Dampfs (46) mit einem dritten Druck einschließt.

5. Dampfinjektionsbaugruppe gemäß Anspruch 4, wobei der zweite Druck geringer als der erste Druck ist und der dritte Druck geringer als der zweite Druck ist.

6. Dampfinjektionsbaugruppe gemäß Anspruch 5, wobei die Dampfversorgung (60) mindestens einen des ersten Dampfs (42), des zweiten Dampfs (44) und des dritten Dampfs (46) umfasst.

7. Dampfinjektionsbaugruppe gemäß Anspruch 6, wobei die Dampfversorgung (60) den zweiten Dampf (44) und den dritten Dampf (46) umfasst.

8. Dampfinjektionsbaugruppe gemäß einem vorhergehenden Anspruch, wobei der erste Eintritt (100) ein Filtergehäuse einschließt, wobei der Eintritt (100) die Luftversorgung (102) und die Dampfversorgung (60) vor der Injektion in den Kompressor (12) aufnimmt und mischt.

9. Dampfinjektionsbaugruppe gemäß Anspruch 8, wobei die Dampfversorgung (60) eine Dampftemperatur besitzt und die Luftversorgung (102) eine Lufttemperatur besitzt, wobei die Dampftemperatur größer als die Lufttemperatur ist.

10. Dampfinjektionsbaugruppe gemäß einem vorhergehenden Anspruch, ferner umfassend:
eine Dampfturbine (72), die Dampf vom Wärmerückgewinnungssystem (30) aufnimmt und einen Abdampf ausstößt;
einen Kondensator (76) zum Kondensieren von Abdampf in Wasser; und
eine Wasserpumpe (78), die konfiguriert ist, um das Wasser vom Kondensator (76) aufzunehmen und das Wasser zum Wärmerückgewinnungssystem (32) zu pumpen.

11. Dampfinjektionsbaugruppe gemäß einem vorhergehenden Anspruch, wobei das Gasturbinensystem (11) eine Brennkammer (14) und eine Turbine (16) einschließt; und wobei
das Wärmerückgewinnungssystem (30) konfiguriert ist, um Wärmeabfuhr vom Gasturbinensystem (11) aufzunehmen und zu verarbeiten; und ferner umfassend
mindestens ein Ventil (54), das wirksam mit dem mindestens einen Überhitzer (36,38,42) verbunden ist, um eine Flussrate und eine Temperatur der Dampfversorgung (60) zu regeln.

12. Dampfinjektionsbaugruppe gemäß einem vorhergehenden Anspruch, wobei das Wärmerückgewinnungssystem (32) einen Kessel und/oder eine Prozessdampfquelle (70) umfasst.

## Revendications

1. Ensemble d'injection de vapeur d'eau pour un système à cycle combiné (10), comprenant :
un système de récupération de chaleur (30) ayant au moins un surchauffeur (36, 38, 40) configuré pour générer une alimentation en vapeur d'eau (60) ; et
un système à turbine à gaz (11) ayant une entrée (100) et un compresseur (12), **caractérisé en ce que** l'entrée (100) reçoit une alimentation en air (102) et l'alimentation en vapeur d'eau (60) pour une injection combinée dans le compresseur (12).

2. Ensemble d'injection de vapeur d'eau selon la revendication 1, dans lequel le système de récupération de chaleur (30) comprend une pluralité de surchauffeurs (36, 38, 40).

3. Ensemble d'injection de vapeur d'eau selon la revendication 2, dans lequel chacun de la pluralité de surchauffeurs (36, 38, 40) produit de la vapeur d'eau sous des pressions distinctes.

4. Ensemble d'injection de vapeur d'eau selon l'une quelconque des revendications 1 à 3, dans lequel le système de récupération de chaleur (30) comprend un premier surchauffeur (36) pour produire une première vapeur d'eau (42) à une première pression, un deuxième surchauffeur (38) pour produire une deuxième vapeur d'eau (44) à une deuxième pression et un troisième surchauffeur (40) pour produire une troisième vapeur d'eau (46) à une troisième pression.

5. Ensemble d'injection de vapeur d'eau selon la revendication 4, dans lequel la deuxième pression est inférieure à la première pression et la troisième pression est inférieure à la deuxième pression.

6. Ensemble d'injection de vapeur d'eau selon la revendication 5, dans lequel l'alimentation en vapeur d'eau (60) comprend au moins l'une de la première vapeur d'eau (42), de la deuxième vapeur d'eau (44) et de la troisième vapeur d'eau (46).

7. Ensemble d'injection de vapeur d'eau selon la revendication 6, dans lequel l'alimentation en vapeur d'eau (60) comprend la deuxième vapeur d'eau (44) et la troisième vapeur d'eau (46).

8. Ensemble d'injection de vapeur d'eau selon l'une quelconque des revendications précédentes, dans lequel l'entrée (100) comprend un boîtier de filtre, dans lequel l'entrée (100) reçoit et mélange l'alimentation en air (102) et l'alimentation en vapeur d'eau (60) avant l'injection dans le compresseur (12).

9. Ensemble d'injection de vapeur d'eau selon la revendication 8, dans lequel l'alimentation en vapeur d'eau (60) a une température de vapeur d'eau et l'alimentation en air (102) a une température de l'air, dans lequel la température de la vapeur d'eau est supérieure à la température de l'air.

10. Ensemble d'injection de vapeur d'eau selon l'une quelconque des revendications précédentes, comprenant en outre :
une turbine à vapeur d'eau (72) qui reçoit de la vapeur d'eau du système de récupération de chaleur (30) et expulse de la vapeur à base de vapeur d'eau ;
un condenseur (76) pour condenser la vapeur en eau ; et
une pompe à eau (78) configurée pour recevoir l'eau du condenseur (76) et pomper l'eau dans le système de récupération de chaleur (32).

11. Ensemble d'injection de vapeur d'eau selon l'une quelconque des revendications précédentes, dans lequel le système de turbine à gaz (11) comprend une chambre de combustion (14) et une turbine (16) ; et dans lequel :
le système de récupération de chaleur (30) est configuré pour recevoir et traiter l'échappement de chaleur du système à turbine à gaz (11) ; et comprenant en outre :
au moins une soupape (54) raccordée en service au au moins un surchauffeur (36, 38, 42) pour commander le débit et la température de l'alimentation en vapeur d'eau (60).

12. Ensemble d'injection de vapeur d'eau selon l'une quelconque des revendications précédentes, dans lequel le système de récupération de chaleur (32) comprend au moins l'une d'une chaudière et d'une source de vapeur d'eau de traitement (70).
